# EUROPÄISCHE PATENTSCHRIFT

(11) **EP 2 788 810 B1**
(45) Veröffentlichungstag und Bekanntmachung des Hinweises auf die Patenterteilung: **22.01.2020**
(21) Anmeldenummer: 12805993.8
(22) Anmeldetag: 05.12.2012
(51) Int. Cl.: G02B 21/00, G02F 1/01, G01N 21/64, G02B 21/16, G02B 27/14, G02B 26/06, G02B 27/28

(54) **HOCHAUFLÖSENDES LICHTMIKROSKOP**
HIGH RESOLUTION LIGHT MICROSCOPE
MICROSCOPE OPTIQUE À HAUTE RÉSOLUTION

(30) Priorität: 05.12.2011 DE 102011087770
(43) Veröffentlichungstag der Anmeldung: 15.10.2014
(73) Patentinhaber: Technische Universität Braunschweig, 38106 Braunschweig (DE)
(72) Erfinder: WALLA, Peter, J., 38106 Braunschweig (DE); HAFI, Nour, 38102 Braunschweig (DE)
(74) Vertreter: Taruttis, Stefan Georg
(86) Internationale Anmeldenummer: PCT/EP2012/074576
(87) Internationale Veröffentlichungsnummer: WO 2013/083665

(56) Entgegenhaltungen:
- DE-A1- 19 626 261
- DE-A1- 19 626 261
- DE-A1-102006 046 111
- DE-A1-102006 046 111
- DE-A1-102006 046 111
- US-A- 5 457 536
- US-A- 5 457 536
- US-A- 6 025 917
- US-A- 6 025 917
- HA T ET AL: "SINGLE MOLECULE DYNAMICS STUDIED BY POLARIZATION MODULATION", PHYSICAL REVIEW LETTERS, AMERICAN PHYSICAL SOCIETY, US, Bd. 77, Nr. 19, 4. November 1996 (1996-11-04), Seiten 3979-3982, XP000938294, ISSN: 0031-9007, DOI: 10.1103/PHYSREVLETT.77.3979
- TH. LACOSTE ET AL: "Contrast enhancement using polarization-modulation scanning near-field optical microscopy (PM-SNOM)", ULTRAMICROSCOPY, Bd. 71, Nr. 1-4, 1. März 1998 (1998-03-01) , Seiten 333-340, XP055052782, ISSN: 0304-3991, DOI: 10.1016/S0304-3991(97)00093-4
- HA T ET AL: "Probing the interaction between two single molecules: Fluorescence resonance energy transfer between a single donor and a single acceptor", PROCEEDINGS OF THE NATIONAL ACADEMY OF SCIENCES, NATIONAL ACADEMY OF SCIENCES, US, Bd. 93, Nr. 13, 1. Januar 1996 (1996-01-01), Seiten 6264-6268, XP002171249, ISSN: 0027-8424, DOI: 10.1073/PNAS.93.13.6264
- BOKOR ET AL: "On polarization effects in fluorescence depletion microscopy", OPTICS COMMUNICATIONS, NORTH-HOLLAND PUBLISHING CO. AMSTERDAM, NL, Bd. 272, Nr. 1, 20. Januar 2007 (2007-01-20), Seiten 263-268, XP005855210, ISSN: 0030-4018, DOI: 10.1016/J.OPTCOM.2006.11.002
- TINA ZÜCHNER ET AL: "Lichtmikroskopie mit Doughnut-Moden: ein Konzept zur Detektion, Charakterisierung und Manipulation einzelner Nanoobjekte", ANGEWANDTE CHEMIE (INTERNATIONAL ED. IN ENGLISH), Bd. 123, Nr. 23, 27. Mai 2011 (2011-05-27) , Seiten 5384-5405, XP055052724, ISSN: 0044-8249, DOI: 10.1002/ange.201005845
- HA T ET AL: "SINGLE MOLECULE DYNAMICS STUDIED BY POLARIZATION MODULATION", PHYSICAL REVIEW LETTERS, AMERICAN PHYSICAL SOCIETY, NEW YORK, US, Bd. 77, Nr. 19, 4. November 1996 (1996-11-04), Seiten 3979-3982, XP000938294, ISSN: 0031-9007, DOI: 10.1103/PHYSREVLETT.77.3979
- TH. LACOSTE ET AL: "Contrast enhancement using polarization-modulation scanning near-field optical microscopy (PM-SNOM)", ULTRAMICROSCOPY, Bd. 71, Nr. 1-4, 1. März 1998 (1998-03-01) , Seiten 333-340, XP055052782, ISSN: 0304-3991, DOI: 10.1016/S0304-3991(97)00093-4
- HA T ET AL: "Probing the interaction between two single molecules: Fluorescence resonance energy transfer between a single donor and a single acceptor", PROCEEDINGS OF THE NATIONAL ACADEMY OF SCIENCES, NATIONAL ACADEMY OF SCIENCES, US, Bd. 93, Nr. 13, 1. Januar 1996 (1996-01-01), Seiten 6264-6268, XP002171249, ISSN: 0027-8424, DOI: 10.1073/PNAS.93.13.6264
- HA T ET AL: "SINGLE MOLECULE DYNAMICS STUDIED BY POLARIZATION MODULATION", PHYSICAL REVIEW LETTERS, AMERICAN PHYSICAL SOCIETY, US, vol. 77, no. 19, 4 November 1996 (1996-11-04), pages 3979-3982, XP000938294, ISSN: 0031-9007, DOI: 10.1103/PHYSREVLETT.77.3979
- TH. LACOSTE ET AL: "Contrast enhancement using polarization-modulation scanning near-field optical microscopy (PM-SNOM)", ULTRAMICROSCOPY, vol. 71, no. 1-4, 1 March 1998 (1998-03-01), pages 333-340, XP055052782, ISSN: 0304-3991, DOI: 10.1016/S0304-3991(97)00093-4
- HA T ET AL: "Probing the interaction between two single molecules: Fluorescence resonance energy transfer between a single donor and a single acceptor", PROCEEDINGS OF THE NATIONAL ACADEMY OF SCIENCES, NATIONAL ACADEMY OF SCIENCES, US, vol. 93, no. 13, 1 January 1996 (1996-01-01), pages 6264-6268, XP002171249, ISSN: 0027-8424, DOI: 10.1073/PNAS.93.13.6264
- BOKOR ET AL: "On polarization effects in fluorescence depletion microscopy", OPTICS COMMUNICATIONS, NORTH-HOLLAND PUBLISHING CO. AMSTERDAM, NL, vol. 272, no. 1, 20 January 2007 (2007-01-20), pages 263-268, XP005855210, ISSN: 0030-4018, DOI: 10.1016/J.OPTCOM.2006.11.002
- TINA ZÜCHNER ET AL: "Lichtmikroskopie mit Doughnut-Moden: ein Konzept zur Detektion, Charakterisierung und Manipulation einzelner Nanoobjekte", ANGEWANDTE CHEMIE (INTERNATIONAL ED. IN ENGLISH), vol. 123, no. 23, 27 May 2011 (2011-05-27) , pages 5384-5405, XP055052724, ISSN: 0044-8249, DOI: 10.1002/ange.201005845
- KENNETH D. WESTON ET AL: "Orientation Imaging and Reorientation Dynamics of Single Dye Molecules", JOURNAL OF PHYSICAL CHEMISTRY PART B: CONDENSED MATTER, MATERIALS, SURFACES, INTERFACES & BIOPHYSICAL, vol. 105, no. 17, 1 May 2001 (2001-05-01), pages 3453-3462, XP055535135, US ISSN: 1520-6106, DOI: 10.1021/jp001373p

## Beschreibung

Die vorliegende Erfindung betrifft eine Vorrichtung zur optischen Analyse einer Probe, auch als Mikroskop bezeichnet, die für ein optisches Analyseverfahren mit hoher Auflösung zur Detektion fluoreszierender Moleküle eingerichtet ist. Die Vorrichtung und das unter Verwendung der Vorrichtung durchgeführte Verfahren sind eingerichtet, dass von einer Anregungslichtquelle erzeugtes Anregungslicht auf eine Probe gerichtet ist und von der Probe emittiertes Licht detektiert wird. Vorrichtung und Verfahren zeichnen sich dadurch aus, dass das Anregungslicht mit der Detektion synchronisiert ist. Die Anregungslichtquelle kann aus einem Laser bestehen.

### Stand der Technik

US2001/045523 beschreibt die stimulierte Emissionsdepletions-Mikroskopie (STED), bei der eine Probe durch ein Mikroskopobjektiv mit zwei parallel eingekoppelten Lichtpfaden bestrahlt und abgetastet wird und von der Probe emittiertes Licht durch den selben Strahlengang austritt und detektiert wird. Der eine Lichtstrahl wird mittels eines dichroitischen Spiegels in den Strahlengang eingekoppelt und hat eine Anregungswellenlänge, die für das fluoreszierende Molekül der Probe spezifisch ist, während der zweite Lichtstrahl, der ebenfalls mittels eines dichroitischen Spiegels in den gemeinsamen Strahlengang eingekoppelt wird, eine Wellenlänge hat, die zur Abregung fluoreszierender Moleküle der Probe aus deren angeregtem Zustand spezifisch ist, wobei der zweite Lichtstrahl nur einen ringförmigen Bereich des Fokusbereichs ausleuchtet. In der Folge werden fluoreszierende Moleküle, die im Fokus beider Lichtstrahlen liegen, trotz der Anregung durch den ersten Lichtstrahl durch den zweiten Lichtstrahl abgeregt, während die in dem ringförmigen zweiten Lichtstrahl liegenden angeregten fluoreszierenden Moleküle emittieren können, sodass nur deren Emission vom Detektor aufgenommen wird. Für eine besonders hohe Auflösung wird der zweite Lichtstrahl, z.B. mittels eines darin angeordneten Phasenplättchens, in Form eines Interferenzmusters eingestrahlt, das im Messbereich eine Nullstelle hat und ansonsten eine Sättigung der angeregten fluoreszierenden Moleküle mit Abregungslicht erreicht.

Dieses Verfahren ist dadurch nachteilig, dass die Vorrichtung eine sehr präzise Ausrichtung der Strahlengänge für die Anregungswellenlänge und Abregungswellenlänge erfordert und ein zeitaufwändiges Auslenken des Anregungslichts über die Probe, z.B. mittels eines Scanners.

US 2009/0242798 A1 beschreibt die fotoaktivierte Lokalisationsmikroskopie, bei der fluoreszierende Moleküle in einer Probe dadurch einzeln detektiert werden, dass die fluoreszierenden Moleküle zunächst mit Licht einer Schaltwellenlänge bestrahlt werden, woraufhin die fluoreszierenden Moleküle bei Einstrahlung von Licht mit einer Anregungswellenlänge zur Emission angeregt werden. Durch mehrfaches Bestrahlen bei der Schaltwellenlänge wird jeweils eine statistisch verteilte Auswahl fluoreszierender Moleküle durch die nachfolgende Bestrahlung mit Anregungswellenlänge zur Emission angeregt. Zur Auswertung werden die nacheinander detektierten Emissionsmaxima mit hoher Ortsauflösung bestimmt und übereinander gelegt.

Dieses Verfahren ist dadurch nachteilig, dass es auf solche fluoreszierenden Moleküle beschränkt ist, die durch Einstrahlung einer Schaltwellenlänge in einen anregbaren Zustand mit einer für die Analyse passenden zeitlichen Dauer zu bringen sind und die sequenzielle Bestrahlung und Ortung der einzelnen Moleküle zeitaufwändig ist.

Nach der US 5,457,536 A wird zusätzlich zu einem bekannten Mikroskopiebild, das durch Laserscannen erzeugt wird, noch die Größe und Orientierung der Doppelbrechung oder der Zweifarbigkeit aufgenommen und die Amplitude und/oder Phase der spezifischen Oberwellen des oszillierenden Signals isoliert. Die aus den demodulierten Signalen gemessene Doppelbrechung oder Zweifarbigkeit wird abwechselnd mit dem herkömmlichen Rastermikroskopiebild dargestellt.

Die US 6,025,917 beschreibt einen Strahlengang für ein Auflichtmikroskop, bei dem ein Lichtstrahl, dessen Polarisationseigenschaften gemessen werden, auf eine Probe eingestrahlt wird und ein von der Probe emittierter Lichtstrahl aufgenommen wird, um dessen Polarisationseigenschaften zu messen, wobei einer der Lichtstrahlen durch einen teildurchlässigen Spiegel reflektiert bzw. durchgelassen wird. Der eingestrahlte Lichtstrahl soll linear polarisiert sein und mittels eines Strahlteilers auf die Probe gerichtet werden. Zur Analyse wird aus dem emittierten Licht die Intensität der p-Polarisation und der s-Polarisation bestimmt. Die Polarisation des eingestrahlten Lichts kann bei Wechsel auf p-polarisiertes Licht in Bezug auf den Strahlteiler gedreht werden.

Die DE 19626261 A1 beschreibt ein Differenzial-Interferenzmikroskop, bei dem eine Phasendifferenz zwischen zwei Lichtkomponenten bestimmt werden kann, die durch einen Probenkörper gegangen sind.

Bokor et al., Optics Communications 272 (2007) 263-268 beschreibt Polarisationseffekte in einem hochauflösenden Fluoreszenzmikroskop, bei dem ein Anregungslichtstrahl mit einem ringförmigen Abregungslichtstrahl überlagert wird, um Fluoreszenz im Überlappungsbereich auszulöschen und so wirksamen den Anregungslichtstrahl auf einen Durchmesser unterhalb der Beugungsgrenze zu verkleinern.

Züchner et al., Angewandte Chemie 2013, 123, 5384-5405 beschreibt für die STED-Mikroskopie, dass mittels eines Gauß-förmigen Anregungsstrahls, über den kurz darauf ein zweiter gepulster Strahl bei einer Abregungswellenlänge eingestrahlt wird, um ausschließlich Fluoreszenzlicht aus der Anregung zu detektieren.

### Aufgabe der Erfindung

Die Aufgabe der vorliegenden Erfindung liegt in der Bereitstellung einer alternativen Vorrichtung und eines alternativen Verfahrens zur optischen Detektion fluoreszierender Moleküle in einer Probe mit hoher Auflösung, vorzugsweise in der Bereitstellung der Vorrichtung, die einen geringeren Aufwand bei der Einrichtung, insbesondere Fokussierung erfordert und ein Verfahren ermöglicht, das mit jedem bei Einstrahlung einer Anregungswellenlänge fluoreszierenden Molekül durchführbar ist und bevorzugt eine Vielzahl von Molekülen räumlich auflöst. Weiter soll das Verfahren nicht auf z.B. durch eine Schaltwellenlänge schaltbare fluoreszierende Moleküle beschränkt sein.

### Allgemeine Beschreibung der Erfindung

Die Erfindung löst die Aufgabe mit den Merkmalen der Ansprüche, insbesondere mit einer Vorrichtung zur optischen Analyse einer Probe, die zumindest ein fluoreszierendes Molekül enthält, mit einer Anregungslichtquelle, die optional aus einem Laser besteht, der zur Erzeugung von Licht mit einer Anregungswellenlänge eingerichtet ist, wobei die Vorrichtung einen Strahlengang aufweist, der durch ein optisches Element, nachfolgend auch als Objektiv bezeichnet, auf die Probe gerichtet ist. Die Vorrichtung weist einen Detektor auf, der für die Detektion der von dem fluoreszierenden Molekül emittierten Strahlung eingerichtet ist und in einem Strahlengang angeordnet ist, in dem von der Probe emittiertes Licht geführt ist. Der Strahlengang, in dem das von der Probe emittierte Licht geführt ist, ist durch dasselbe Objektiv gerichtet, durch das der Strahlengang des Anregungslichts geführt ist, das von der Anregungslichtquelle erzeugt ist. Bevorzugt verläuft der Strahlengang in einem an das Objektiv angrenzenden Abschnitt für Anregungslicht kollinear zu dem Strahlengang für emittiertes Licht, z.B. in einem Abschnitt, in dem der Strahlengang zwischen dem Objektiv und einem Spiegel, insbesondere einem teildurchlässigen Spiegel verläuft, der den Strahlengang für Anregungslicht von der Anregungslichtquelle auf das Objektiv ausrichtet und/oder einem Spiegel, der den Strahlengang für emittiertes Licht ausgehend vom Objektiv auf den Detektor oder einen auf den Detektor ausgerichteten Spiegel ausrichtet.

Die Vorrichtung zeichnet sich dadurch aus, dass sie eine Polarisationseinrichtung aufweist, die eingerichtet ist, die Polarisation des Anregungslichts oder eine andere Eigenschaft des Anregungslichtes mit einem Modulationssignal zu modulieren, wobei das Modulationssignal zumindest eine Frequenz, insbesondere eine vorbestimmte Frequenz oder mehrere vorbestimmte überlagerte Frequenzen aufweist oder daraus besteht oder das Modulationssignal aus einer Abfolge von Signalen besteht, die keine Wiederholung oder keine regelmäßige Wiederholung aufweist. Bevorzugt ist die Polarisation eine lineare Polarisation und das Modulieren ist ein Drehen. Die Polarisationseinrichtung, die erfindungsgemäß eingerichtet ist, die Polarisation des von der Anregungslichtquelle erzeugten Anregungslichts zu modulieren, insbesondere mit dem Modulationssignal, z.B. in eine Frequenz zu modulieren, kann auch als Moduliereinrichtung der Polarisation bzw. als Polarisationsmodulator bezeichnet werden, wobei die Polarisation mit dem Modulationssignal, insbesondere in mindestens eine Frequenz moduliert wird, und kann in Ausführungsformen als Polarisationsdreheinrichtung bezeichnet werden, die insbesondere durch das Modulationssignal gesteuert, z.B. frequenzgesteuert ist. Ein solcher Polarisationsmodulator, der durch das Modulationssignal gesteuert, bevorzugt frequenzgesteuert ist, kann ein linear in einem Winkel, insbesondere von 90° zu seiner Polarisationsrichtung bewegbares λ/2-Plättchen, λ/4-Plättchen oder einen linear in einem Winkel, insbesondere senkrecht zu seiner Polarisationsrichtung bewegbaren Zirkularpolarisationsfilter als polarisierendes Element aufweisen oder daraus bestehen. Ein bevorzugter Polarisationsmodulator ist ein mit dem Modulationssignal gesteuert angetriebenes rotierbares polarisierendes Element, das im Strahlengang zwischen der Anregungslichtquelle und dem Objektiv angeordnet ist. Das rotierbare polarisierende Element kann ein linearer Polarisationsfilter sein, insbesondere bei einer Anregungslichtquelle, die eingerichtet ist, unpolarisiertes oder circular polarisiertes Anregungslicht zu erzeugen, oder ein Phasenverschiebungsplättchen, bevorzugt ein λ/2-Plättchen oder ein λ/4-Plättchen, bei einer Anregungslichtquelle, die eingerichtet ist, linear polarisiertes Anregungslicht zu erzeugen, oder eine Kombination von gegeneinander verdrehten Spiegeln, z.B. um 45° gegeneinander verdreht angeordnet, sodass dessen Rotation durch das Modulationssignal gesteuert ist und die Polarisationsmodulation des Anregungslichts bestimmt. Alternativ kann der Polarisationsmodulator ein mit dem Modulationssignal, insbesondere mit zumindest einer Frequenz, angesteuerter akusto-optischer Modulator oder ein elektro-optischer Modulator, insbesondere eine Pockelszelle, sein, die statisch sind oder rotierbar.

Für die Zwecke der Erfindung ist ein Modulationssignal eine Abfolge von Signalen, insbesondere mit einer festen bzw. vorbestimmten Frequenz oder mit zumindest zwei überlagerten festen bzw. vorbestimmten Frequenzen, oder eine Abfolge von Signalen, die optional während der Dauer des Analyseverfahrens keine Wiederholung aufweisen oder keine regelmäßige Wiederholung aufweisen oder bevorzugt periodisch auftreten. Generell kann ein Signal z.B. ein sinusförmiges Signal, ein Rechtecksignal und/oder ein Sägezahnsignal sein.

Ein Modulationssignal, das aus einer Abfolge von Signalen besteht, die keine Wiederholung oder keine regelmäßige Wiederholung aufweist, kann z.B. ein Signal sein, das eine Modulation der Polarisation steuert, die jede Polarisationsrichtung zumindest oder genau einmal durchläuft, wobei bevorzugt die Polarisation von einer anfänglichen Orientierung zu einer identischen Orientierung zu Ende der Modulation moduliert wird, wobei z.B. die Modulation eine lineare Polarisation genau einmal um 180° oder um 360° dreht.

Weiter betrifft die Erfindung ein Verfahren zur optischen Analyse einer Probe, das die Schritte aufweist, die mit der Vorrichtung durchführbar sind, bzw. die Schritte, für die die Vorrichtung eingerichtet ist, insbesondere ein Verfahren zur optischen Analyse einer Probe mittels der Vorrichtung.

Die Vorrichtung erzeugt durch die Modulation der Polarisation des Anregungslichts durch zumindest ein Modulationssignal, das eine zeitlich konstante oder zeitlich veränderliche Frequenz sein kann, die vom Modulationssignal abhängige Anregung eines Teils der fluoreszierenden Moleküle der Probe. Denn ein fluoreszierendes Molekül der Probe wird im Wesentlichen nur dann durch das Anregungslicht zur Emission angeregt, wenn der Polarisationsvektor des Anregungslichts parallel zum Übergangsdipolmomentvektor des fluoreszierenden Moleküls ausgerichtet ist. Aufgrund der unterschiedlichen Ausrichtung der Übergangsdipolmomentvektoren der einzelnen fluoreszierenden Moleküle in der Probe führt die Einstrahlung von Anregungslicht mit einer frequenzmodulierten Polarisation zur vom Modulationssignal abhängigen Anregung der jeweils passend ausgerichteten fluoreszierenden Moleküle. Mittels der erfindungsgemäßen Vorrichtung werden daher beim Detektionsverfahren fluoreszierende Moleküle der Probe entsprechend der unterschiedlichen Ausrichtung ihrer Übergangsdipolmomentvektoren abhängig von dem Modulationssignal der Polarisation des Anregungslichts bzw. abhängig von dem Modulationssignal, mit dem der Polarisationsmodulator gesteuert ist, angeregt und emittieren in einem zeitlichen Abstand bzw. mit Phasenverschiebung abhängig vom Modulationssignal bzw. abhängig von der durch das Modulationssignal gesteuerten Drehung der Polarisation des Anregungslichts.

Für die Synchronisation der Detektion mit der Modulation der Polarisation des Anregungslichts ist der Detektor der Vorrichtung bevorzugt abhängig von dem Modulationssignal, das die Polarisationseinrichtung steuert, bzw. abhängig der Frequenz der Polarisationseinrichtung gesteuert und ist insbesondere zur Detektion bzw. zur Isolierung des emittierten Lichts mit oder ohne Phasenverschiebung, optional mit oder ohne Amplitudenverschiebung, zu zumindest einer Frequenz eingerichtet, die gleich dem Modulationssignal ist. Die Detektion der Emission fluoreszierender Moleküle bei der zumindest einen Frequenz, die dem den Polarisationsmodulator steuernden Modulationssignal entspricht, führt zur Isolation der bei dem Modulationssignal angeregten Emission. Eine bevorzugte Einrichtung für die Steuerung und/oder Analyse des die Polarisationseinrichtung steuernden Modulationssignals, insbesondere der Frequenz der Polarisationseinrichtung und/oder eines vom Modulationssignal abhängig gesteuerten Detektors ist ein sogenannter Demodulator, z.B. Lock-In-Verstärker, oder eine andere Einrichtung, die zur Analyse und Bestimmung der Fourier-Transformation eingerichtet ist, insbesondere zur gleichzeitigen Analyse und Bestimmung der Fourier-Transformation von zwei oder mehr detektierten Frequenzen und Phasen, vorzugsweise bei der Frequenz des Modulationssignals. Wenn der Polarisationsmodulator zur Modulation durch ein Modulationssignal eingerichtet ist, das aus einer Abfolge von Signalen besteht, die keine Wiederholung oder keine regelmäßige Wiederholung aufweist, ist der Detektor mit einer Signalauswerteeinrichtung gekoppelt, die insbesondere eingerichtet ist, die detektierten Signale zu entfalten. Diese Entfaltung der detektierten Signale entspricht der Demodulation bei einem Modulationssignal, das aus einer Abfolge von Signalen besteht, die keine Wiederholung oder keine regelmäßige Wiederholung aufweist. Entsprechend kann der Polarisationsmodulator zur Modulation durch ein Modulationssignal eingerichtet sein, das genau eine Periode eines Modulationssignales umfasst oder daraus besteht, während die Signalauswerteeinrichtung zur Entfaltung dieses Modulationssignals eingerichtet ist. Bei nicht-linearer Modulation kann ein Signal, das z.B. genau mit einer oder mehrerer Perioden eines Cosinus-förmigen Signal moduliert ist, auch mit einer anderen Funktion als das Modulationssignal, z.B. einer cos²-Funktion, entfaltet bzw. demoduliert werden.

Für die Zwecke der Erfindung wird ein solches Modulationssignal, das aus einer Abfolge von Signalen besteht, die keine Wiederholung oder keine regelmäßige Wiederholung aufweist, wahlweise unter den Begriff der Frequenz gefasst, da ein solches Modulationssignal z.B. als eine halbe oder als genau eine Periode einer Frequenz darstellbar ist.

Der Detektor ist bevorzugt mit einer Signalauswerteeinrichtung gekoppelt, die eingerichtet ist, ausschließlich die detektierten Signale aufzunehmen bzw. zu isolieren, die bei zumindest einer Frequenz, die gleich dem Modulationssignal bzw. gleich der Frequenz des Modulationssignals ist, detektiert werden.

In Ausführungsformen, in denen das Modulationssignal aus einer Frequenz besteht, ist die Signalauswerteeinrichtung eingerichtet, ausschließlich die detektierten Signale aufzunehmen und zu isolieren, die bei der Frequenz der Polarisationseinrichtung detektiert werden.

Optional weist die Vorrichtung zusätzlich zu dem vorgenannten ersten Detektor zumindest einen zweiten Detektor auf, auf den z.B. mittels jeweils eines teildurchlässigen Spiegels von der Probe emittiertes Licht gelenkt wird und der bevorzugt mit einer Signalauswerteeinrichtung gekoppelt ist, die eingerichtet ist, ausschließlich diejenigen detektierten Signale aufzunehmen bzw. zu isolieren, die um eine konstante Phasenverschiebung zu dem Modulationssignal versetzt detektiert werden, mit der der Polarisationsmodulator angesteuert ist, bzw. zu dem Modulationssignal, mit der der Polarisationsmodulator die Polarisation des Anrechnungslichts moduliert. Ein teildurchlässiger Spiegel ist generell z.B. ein Polarisationsstrahlteiler. Ein solcher Detektor nimmt im Verfahren unterschiedliche Komponenten des von den fluoreszierenden Molekülen emittierten Lichts auf, bevorzugt die Polarisation, die entsprechend der unterschiedlichen Orientierung der Übergangsdipolmomentvektoren der fluoreszierenden Moleküle zufällig ist und daher eine vereinzelte Detektion fluoreszierender Moleküle ergibt. In Ausführungsformen mit einem ersten und zumindest einem zweiten Detektor, die jeweils mit einer Signalauswerteeinrichtung gekoppelt sind, wird aus der unterschiedlichen Phasenverschiebung, Modulationsamplitude und der mittleren Intensität des von den fluoreszierenden Molekülen emittierten Lichts, die die beiden Signalauswerteeinrichtungen aufnehmen und isolieren, eine höhere räumliche Auflösung einzelner Moleküle erreicht.

Bevorzugt ist der Detektor und/der der zweite Detektor ein Flächendetektor, der den Vorteil hat, viele Moleküle gleichzeitig aufzunehmen, z.B. eine CCD-Kamera. Optional können die Detektoren Flächenabschnitte eines Flächendetektors sein. Auch in Ausführungsformen, in denen die Detektoren Flächendetektoren oder Abschnitte eines Flächendetektors sind, kann die Vorrichtung eine Einrichtung zum Auslenken des Anregungslichts über die Probe aufweisen, wie z.B. einen Scanner. Die Einrichtung zum Auslenken des Anregungslichts kann an einer beliebigen Stelle im Strahlengang der Vorrichtung angeordnet sein, insbesondere zwischen einem Objektiv, das das Licht auf die Probe richtet, und einer gesteuerten Polarisationseinrichtung.

Die Anregungslichtquelle besteht bevorzugt aus einem Laser. Der Polarisationsmodulator weist eine durch ein Modulationssignal gesteuerte Polarisationseinrichtung auf oder besteht aus einer durch das Modulationssignal gesteuerten, insbesondere einer frequenzgesteuerten Polarisationseinrichtung. Generell bevorzugt ist die Polarisationseinrichtung eine, die das Anregungslicht linear polarisiert. Die durch das Modulationssignal gesteuerte Polarisationseinrichtung ist im Strahlengang zwischen der Anregungslichtquelle und dem Objektiv angeordnet und kann z.B. ein mit dem Modulationssignal rotierender Linearpolarisator sein, insbesondere ein mit einer Frequenz rotierender Linearpolarisator sein.

Optional kann die Anregungslichtquelle gepulst sein, insbesondere aus 1 gepulsten Laser bestehen.

Generell bevorzugt ist das Modulationssignal, in das der Polarisationsmodulator die Polarisation moduliert und/oder mit dem der Polarisationsmodulator gesteuert ist, vorbestimmt.

Optional kann die Lichtquelle eingerichtet sein, Anregungslicht von einer oder von zumindest zwei Lichtfrequenzen zu erzeugen, die in der Summe der Frequenz des Anregungslichts entsprechen, die für das fluoreszierende Molekül spezifisch ist, insbesondere bei Verwendung der Vorrichtung als Mikroskop für die sogenannte Zweiphotonenanregung bzw. Mehrphotonenanregung. In Ausführungsformen, in der die Lichtquelle eingerichtet ist, das Anregungslicht mit Lichtfrequenzen zu erzeugen, die in der Summe die Frequenz des Anregungslichts für die fluoreszierenden Moleküle bilden, wird die Mehrphotonenanregung realisiert, die den Vorteil eines kleineren Winkelbereichs hat, in dem fluoreszierende Moleküle passend orientiert sind, so dass sich eine höhere Auflösung ergibt.

Optional kann die Vorrichtung zusätzlich zu der vorgenannten ersten Anregungslichtquelle mehr Lichtquellen aufweisen, die weitere Anregungslichtquellen sein können. Der Strahlengang der weiteren Lichtquellen ist vorzugsweise über dichroitische Strahlenteiler in dasselbe Objektiv gerichtet, in das der Strahlengang der ersten Anregungslichtquelle gerichtet ist. Im Strahlengang der weiteren Lichtquellen ist bevorzugt ebenfalls jeweils ein durch das Modulationssignal gesteuerter, insbesondere ein frequenzgesteuerter Polarisationsmodulator angeordnet, der gleich dem ersten Polarisationsmodulator ausgebildet sein kann, der im Strahlengang der ersten Anregungslichtquelle angeordnet ist und bevorzugt eingerichtet sein kann, die Polarisation mit oder ohne Phasenverschiebung zu modulieren, optional mit demselben Modulationssignal bzw. in dieselbe Frequenz wie die Polarisation des Anregungslichts der ersten Lichtquelle.

Erfindungsgemäß ist eine zweite Lichtquelle eingerichtet, Licht einer Abregungswellenlänge zu erzeugen. Dieses Licht einer Abregungswellenlänge bewirkt generell den Übergang des vom Anregungslicht erzeugten Zustands fluoreszierender Moleküle in einen Zustand niedrigerer Energie, von dem keine Emission möglich ist und kann daher auch als Licht zum Quenchen der durch das Anregungslicht erzeugten Emission bezeichnet werden und z.B. eine Wellenlänge aufweisen, die entweder nur eine bestimmte Molekülsorte oder auch mehrere oder alle Molekülsorten abregt.

Besonders bevorzugt ist eine Vorrichtung, bei der die erste und eine zweite Lichtquelle linear polarisiert sind, wobei die Polarisation des Abregungslichtstrahls einen Winkel von >0 bis <180°, bevorzugt 60 bis 120°, insbesondere von 90° zur Polarisation des Anregungslichtstrahles aufweist, z.B. durch einen in ihrem Strahlengang angeordneten Polarisationsmodulator. In dieser Ausführungsform werden nur diejenigen fluoreszierenden Moleküle nicht abgeregt, deren Übergangsdipolmomentvektor genau mit der Polarisation des Anregungslichtstrahls übereinstimmt, so dass der Winkelbereich der passend ausgerichteten fluoreszierenden Moleküle erheblich verkleinert wird und sich in der Folge einzelne Moleküle noch sehr viel besser auflösen und unterscheiden lassen.

In dieser Ausführungsform ist der Polarisationsmodulator besonders bevorzugt im gemeinsamen Strahlengang der linear polarisierten Anregungs- und Abregungslichtquelle angeordnet und eingerichtet, die Polarisationsrichtung des Anregungslichts und des Abregungslichts gleichzeitig bei gleichbleibenden Winkel zwischen den beiden Polarisationsrichtungen mit dem Modulationssignal zu modulieren.
Die Polarisation des Anregungslichts ist bevorzugt in einem Winkel von 90° zur Polarisation des Abregungslichts ausgerichtet, so dass die Polarisationsrichtungen des Lichts von Anregungs- und Abregungslichtquelle in 90° zueinander stehen. In dieser Ausführungsform kann der Polarisationsmodulator ein Polarisationsdrehelement aufweisen, das z.B. aus einem λ/2-Plättchen besteht, das für die Wellenlängen beider Lichtquellen geeignet ist. In bevorzugter Ausführung weist die Vorrichtung eine erste Lichtquelle auf und eine zweite Lichtquelle, die eingerichtet sind, parallel linear polarisiertes Licht zu erzeugen, das mittels eines dichroitischen Spiegels in einen gemeinsamen Strahlengang gelenkt wird, der auf einen Polarisationsmodulator gerichtet ist, z.B. ein frequenzgesteuert rotierendes λ/2-Plättchen, wobei anschließend der Strahlengang auf eine optische Einrichtung gerichtet ist, die eingerichtet ist, einen Wellenlängenbereich als Teilstrahl abzuteilen, dessen Polarisation zu drehen, z.B. um 30-150°, bevorzugter um 60-120°, insbesondere um 90°, und diesen Teilstrahl parallel mit dem nicht abgeteilten Teilstrahl in das optische Element zu richten, das den Strahlengang auf die Probe fokussiert. Entsprechend ist die Polarisationsrichtung des Abregungslichts generell bevorzugt von demselben Modulationssignal gesteuert, wie die Polarisationseinrichtung des Anregungslichts.

Zusätzlich oder optional kann Abregungslicht in das Objektiv, das insbesondere ein Mikroskopobjektiv ist, gerichtet sein, das nur Teile des Fokusbereichs ausleuchtet. Optional zusätzlich zur Modulation der Polarisation wird Abregungslicht in Form eines Interferenzmusters auf die Probe gerichtet, das am Ort des Messbereichs eine Nullstelle aufweist und außerhalb dieses Orts eine Intensität, die eine Sättigung bei der Abregung des mit dem Anregungslicht angeregten Zustands des Fluoreszenzfarbstoffs erreicht. Dies kann für eine besonders hohe Auflösung dadurch erreicht werden, dass zusätzlich ein zweiter Lichtstrahl einer Abregungswellenlänge, z.B. mittels eines darin angeordneten Phasenplättchens, das ein Interferenzmuster mit einer Nullstelle erzeugt, und im übrigen Fokusbereich eine für die Sättigung der angeregten fluoreszierenden Moleküle mit Abregungslicht ausreichende Intensität aufweist. Die Nullstelle des Abregungslichts erlaubt dort die Emission durch die fluoreszierenden Moleküle.

Alternativ oder zusätzlich kann die Vorrichtung im Strahlengang der Anregungslichtquelle einen ersten Teilungsspiegel aufweisen, der einen Teil des Anregungslichts umgelenkt, insbesondere um 45°, und einen zweiten Teilungsspiegel, zu dem der vom ersten halbdurchlässigen Teilungsspiegel abgeteilte Teilstrahl in den Strahlengang ausgerichtet wird, in den der nicht abgelenkte Teilstrahl ausgerichtet ist, wobei in dem Strahlengang des abgelenkten Teilstrahls ein weiterer Polarisationsmodulator, ein Phasenverschiebungselement und/oder ein Polarisationsdrehelement angeordnet ist. Der Strahlengang des abgelenkten Teilstrahls wird nach dem ersten Teilungsspiegel zum zweiten Teilungsspiegel gelenkt, z.B. durch einen ersten und einen zweiten Umlenkspiegel, wobei z.B. ein weiterer Polarisationsmodulator, ein Phasenverschiebungselement und/oder ein Polarisationsdrehelement zwischen den Umlenkspiegeln oder zwischen einem Umlenkspiegel und einem der Teilungsspiegel angeordnet sein kann.

In weiterer Ausführungsform weist die Vorrichtung eine Ablenkungseinrichtung im Strahlengang vor dem Objektiv auf, die besonders bevorzugt gesteuert ist, den Strahlengang nach einem vorbestimmten Muster in das Objektiv zu richten, insbesondere zur Führung des Strahlengangs in einem vorbestimmten Muster über die Probe, um nacheinander Abschnitte der Probe mit dem Strahl abzutasten. Ein solches optionales Ablenkungselement, das insbesondere ein gesteuert auslenkbarer Spiegel ist, der den auf das Objektiv gerichteten Strahlengang gegen das Objektiv richtet und vorzugsweise auch den von fluoreszierenden Molekülen emittiertes Licht in einem gleich verlaufenden Strahlengang lenkt, weist die Vorrichtung vorzugsweise eine Auswertungseinheit auf, die eingerichtet ist, die während der gesteuerten Führung des Strahlengangs über die Probe aufgenommenen Detektionssignale entsprechend der gesteuerten Führung anzuordnen. Auf diese Weise ist die Vorrichtung zum Abtasten (Scannen) einer Probe eingerichtet. Diese Ausführungsform ist bevorzugt bei Ausführungsformen, in denen die Detektoren keine Flächendetektoren oder Abschnitte eines Flächendetektors sind.

Wahlweise kann die Vorrichtung eine Auswerteeinheit aufweisen, die eingerichtet ist, die Emissionsmaxima aus den bei zumindest einer Frequenz, die von dem Modulationssignal abhängig ist, detektierten Emissionssignalen ortsspezifisch in einer gemeinsamen Darstellung darzustellen.

Generell wird das Verfahren durch die Einrichtung der Vorrichtung beschrieben. Das Verfahren zur optischen Analyse einer Probe, die zumindest ein fluoreszierendes Molekül enthält, umfasst die Einstrahlung von Licht einer Anregungswellenlänge, die zur Anregung von Emission für das fluoreszierende Molekül spezifisch ist, auf die Probe und die Detektion der von dem fluoreszierenden Molekül emittierten Strahlung, wobei der

Strahlengang, in dem die emittierte Strahlung geführt wird, durch dasselbe Objektiv gerichtet ist, durch das der Strahlengang des Lichts der Anregungswellenlänge geführt ist, wie dies mit Bezug auf die Vorrichtung dargestellt ist. Die Polarisation des Anregungslichts wird mit einem Modulationssignal moduliert, das eine Frequenz, mehrere überlagerte Frequenzen aufweisen oder daraus bestehen kann. Das Modulationssignal kann auch, wie mit Bezug auf die Vorrichtung beschrieben, aus einer Abfolge von Signalen bestehen, die keine Wiederholung aufweist, z.B. aus einem Anteil von 180° bis 360° einer Periode einer trigonometrischen Funktion bestehen. Die Polarisation des Anregungslichts kann mittels einer Polarisationseinrichtung moduliert werden, die durch ein Modulationssignal gesteuert ist.

Erfindungsgemäß wird Licht einer Abregungswellenlänge und/oder Licht einer Umschaltwellenlänge auf die Probe eingestrahlt. Das Licht einer Abregungswellenlänge ist in einem Winkel von >0° bis <180°, insbesondere von 30 bis 120°, bevorzugt 90° in Bezug zur Polarisation des Lichts der Anregungswellenlänge polarisiert. Dabei wird die Polarisation des Lichts der Abregungswellenlänge mit demselben Modulationssignal moduliert, wie das Licht der Anregungswellenlänge.

Die Detektion der Emission ist mit der Modulation der Polarisation des Anregungslichts synchronisiert, z.B. ist die Detektion der Emission von dem Modulationssignal gesteuert, so dass die Emission isoliert werden kann, die mit oder ohne Phasenverschiebung zum Modulationssignal detektiert wird. Diese Steuerung der Detektion der Emission durch das Modulationssignal kann als Demodulation bezeichnet werden oder bei einem Modulationssignal, das keine Wiederholung aufweist, als Entfaltung. Ein Modulationssignal, das keine Wiederholung aufweist, kann z.B. genau eine Periode einer trigonometrischen Funktion umfassen oder daraus bestehen, während die Signalauswertung durch Entfaltung dieses Modulationssignals erfolgt.

Eine mikroskopische Darstellung ist mit dem erfindungsgemäßen Verfahren erhältlich, die unter Verwendung der Vorrichtung erzeugt ist. Die mit dem erfindungsgemäßen Verfahren erhältlichen mikroskopischen Darstellungen zeichnen sich dadurch aus, dass sie eine wesentlich höhere

### Genaue Beschreibung der Erfindung

Die Erfindung wird nun genauer mit Bezug auf die Figuren beschrieben, die schematisch in
- Figur 1 eine Ausführungsform,
- Figur 2 einen Ausschnitt einer bevorzugten Ausführungsform,
- Figur 3, A bis F die Modulation und Demodulation in einer Ausführungsform des Verfahrens nur mit Anregungslicht,
- Figur 4, A bis F die Modulation und Demodulation in einer Ausführungsform des Verfahrens mit Anregungslicht und Abregungslicht,
- Figur 5A eine herkömmliche fluoreszenzmikroskopische Aufnahme und in Figur 5 B eine mittels der Erfindung erzeugte mikroskopische Aufnahme und in Figur 5 C übereinandergelegte Intensitätsprofile desselben Schnitts durch Figur 5A und 5B und
- Figur 6A eine herkömmliche fluoreszenzmikroskopische Aufnahme und in Figur 6 B eine weitere, mittels der Erfindung erzeugte mikroskopische Aufnahme zeigen und in Figur 6C übereinandergelegte Intensitätsprofile desselben Schnitts durch Figur 6 A und 6 B.

Das Objektiv 1 ist mittels einer Fokussiereinrichtung 2 auf die Probe 3 fokussierbar, die fluoreszierende Moleküle enthält. Eine Anregungslichtquelle 4 erzeugt Anregungslicht 5, dessen Strahlengang in das Objektiv 1 gerichtet ist, hier gezeigt mittels eines Spiegels 6, der mittels einer Steuerungseinrichtung 7 gesteuert auslenkbar ist, z.B. zur gesteuerten Führung des Anregungslichts 5 über die Probe 3.

Der Polarisationsmodulator 8 ist eingerichtet, die Polarisation des Anregungslichts 5, die bevorzugt eine lineare Polarisationsrichtung ist, mit zumindest einer Frequenz zu modulieren, die das Modulationssignal darstellt. Der Polarisationsmodulator 8 kann, wie durch den Pfeil angedeutet, ein senkrecht zum Strahlengang des Anregungslichts 5 rotierendes λ/2-Plättchen sein.

Ein erster Detektor 10 ist im Strahlengang des von der Probe 3 emittierten und durch das Objektiv 1 gebildeten Strahlengangs dadurch angeordnet, dass ein erster dichroitischer Spiegel 11 aus dem Objektiv 1 austretendes emittiertes Licht aus dem konfokalen Abschnitt des Strahlengangs ablenkt. Ein optionaler zweiter Detektor 12 kann dadurch auf das emittierte Licht ausgerichtet sein, dass ein Anteil des emittierten Lichts von einem zweiten teildurchlässigen Spiegel 13 auf den zweiten Detektor 12 gelenkt wird. Der zweite teildurchlässige Spiegel ist bevorzugt ein Polarisationsstrahlteiler 13. Der zweite teildurchlässige Spiegel bzw. Polarisationsstrahlteiler 13 kann wie in der Figur gezeigt in dem Abschnitt des Strahlengangs angeordnet sein, der zwischen dem ersten dichroitischen Spiegel 11 und dem ersten Detektor 10 liegt, oder in einem anderen Abschnitt des Strahlengangs.

Erster Detektor 10 und zweiter Detektor 12 sind mit jeweils einer Auswerteeinheit gekoppelt, die bevorzugt nur Signale herausfiltert, die mit einer Frequenz gleich dem Modulationssignal moduliert sind, mit dem der Polarisationsmodulators 8 gesteuert ist. Z. B. kann die Auswerteeinheit ein Demodulator, insbesondere ein Lock-In-Verstärker sein. Dabei können erster Detektor 10 und zweiter Detektor 12 erster jeweils mit einer Auswerteeinheit gekoppelt sein, die nur die Signale in der Frequenz des Modulationssignals der Polarisation herausfiltert, mit jeweils unterschiedlicher Phasenverschiebung, insbesondere in einer Ausführungsform, in der der Strahlteiler 13 ein Polarisationsstrahlteiler ist.

Optional weist die Vorrichtung eine zweite Lichtquelle 20 auf, deren Strahlengang in den Strahlengang des Anregungslichts 5 gelenkt wird, z.B. mittels eines zweiten dichroitischen Spiegels 14, der im Strahlengang des Anregungslichts 5 angeordnet ist und auf den die zweite Lichtquelle 20 ausgerichtet ist. Die zweite Lichtquelle 20 kann mittels eines optischen Elements 21, das ein zweiter Polarisationsmodulator, ein Phasenverschiebungselement und/oder ein Polarisationsdrehelement umfassen oder daraus bestehen kann, ein zweites Anregungslicht, insbesondere Licht einer Abregungswellenlänge oder Licht einer Schaltwellenlänge abgeben. Generell bevorzugt ist die zweite Lichtquelle 20 zur Erzeugung von Licht einer Abregungswellenlänge eingerichtet, so dass dessen Polarisation gemeinsam mit dem Anregungslicht 5 durch den Polarisationsmodulator 8 mit dem Modulationssignal moduliert wird, wobei insbesondere ein Winkel von bevorzugt 90° zwischen der Polarisationsrichtung des Anregungslichts 5 und der Polarisationsrichtung des Lichts der zweiten Lichtquelle 20 eingestellt ist.

Die schematisch dargestellte optionale optische Einrichtung 22 dient z.B. zur Drehung der Polarisation eines Teilstrahls des von der der ersten Lichtquelle 4 und/oder des von der zweiten Lichtquelle 20 erzeugten Lichts. Bevorzugt wird die Polarisation des von einer zweiten Lichtquelle 20 erzeugten Lichts gedreht, das eine Abregungswellenlänge aufweist. Die optische Einrichtung 22 kann für eine Drehung der Polarisation des Teilstrahls um z.B. >0° bis <180°, insbesondere um 30° bis 150°, bevorzugt um 60° bis 120°, bevorzugter um 90° eingerichtet sein.

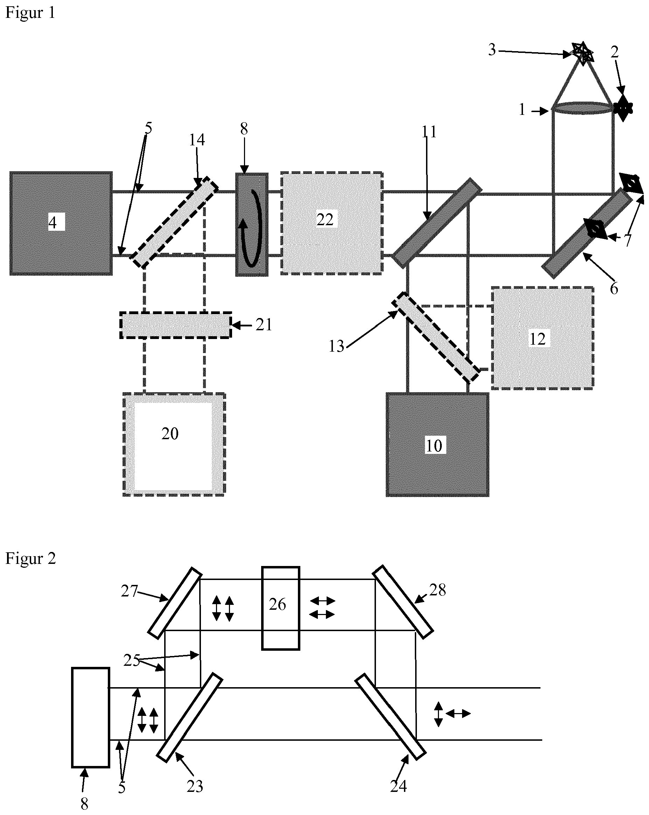

Figur 2 zeigt die Anordnung eines ersten dichroitischen Spiegels 23 und eines beabstandeten zweiten dichroitischen Spiegels 24 im Strahlengang des Anregungslichts 5, das vom Polarisationsmodulator 8 erfindungsgemäß mit einer Frequenz in eine Polarisationsebene ausgerichtet ist. Der vom ersten dichroitischen Spiegel 23 abgelenkte Teilstrahl 25 wird auf den zweiten dichroitischen Spiegel 24 gelenkt, wobei im Strahlengang zwischen dem ersten und dem zweiten dichroitischen Spiegel 23, 24 zumindest ein optisches Element 26 angeordnet ist, das bevorzugt ein Phasenverschiebungselement ist, das die Polarisation des abgelenkten Teilstrahls um 90° dreht, ein weiterer Polarisationsmodulator und/oder ein Polarisationsdrehelement. Insbesondere in dieser Ausführungsform können die Strahlengänge von Anregungs- und Abregungslicht in einem gemeinsamen Strahlengang geführt sein. In dieser Ausführung kann der Polarisationsmodulator 8 aus 1 Polarisationsmodulator 8 bestehen, um die identische Modulationsfrequenz für Anregungs- und Abregungslicht mit einem festen Phasenwinkel, insbesondere von 90° zu erzeugen. Die Polarisation ist schematisch in Figur 2 durch die Doppelpfeile dargestellt.

Der erste Umlenkspiegel 27 und der zweite Umlenkspiegel 28 sind beispielhaft für optische Elemente gezeigt, die im Teilstrahl 25 angeordnet sind, um den Teilstrahl 25 vom ersten dichroitischen Spiegel 23 zum zweiten dichroitischen Spiegel 24 lenken.

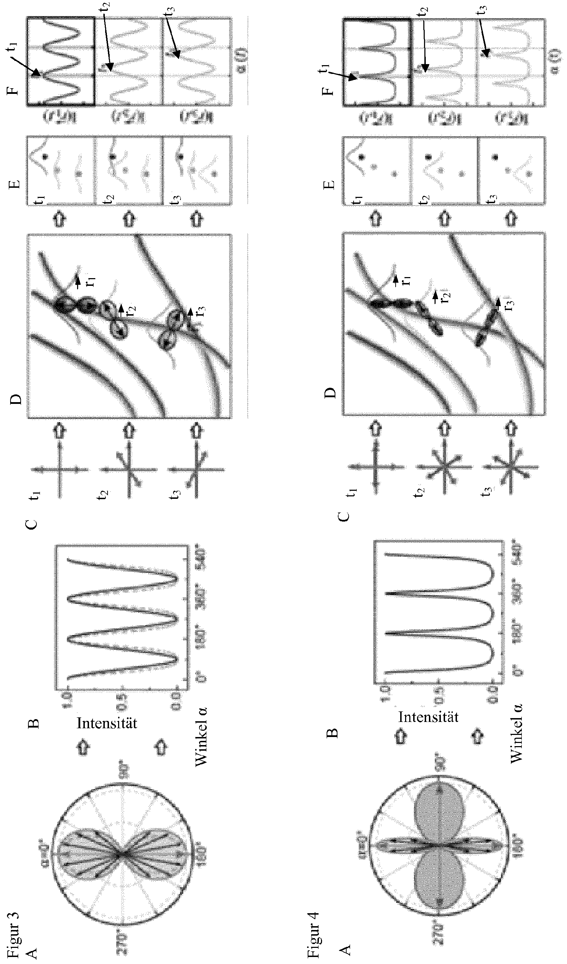

In den in Figuren 3 und 4 gezeigten Beispielen wird das Anregungslicht mit einer festen Frequenz moduliert, Eine Periode des Signals stellt ein Beispiel für eine Modulation dar, die aus einer Abfolge von Signalen besteht, die keine Wiederholung oder keine regelmäßige Wiederholung aufweist. Dabei zeigen die Figuren C die Polarisation des Anregungslichts zu 3 Zeitpunkten t₁, t₂, t₃ und Figuren D die Ausrichtung der Dipolmomentvektoren r₁, r₂, r₃ von drei beispielhaften fluoreszierenden Molekülen. Bei Parallelität der Polarisation des Anregungslichts mit der Ausrichtung eines der Dipolmomentvektoren r₁, r₂, r₃ wird ein Signal erzeugt, das in Figuren E und F für die Zeitpunkte t₁, t₂, t₃ dargestellt ist. Durch den zeitlichen Versatz werden die einzeln zur Emission angeregten fluoreszierenden Moleküle einzeln detektiert und dadurch räumlich voneinander getrennt, was zu einer besseren Auflösung der mikroskopischen Darstellung führt.

In Figur 3A bis F ist die optische Analyse für die Ausführungsform des Verfahrens gezeigt, bei der nur Anregungslicht von einer ersten Lichtquelle 4 frequenzmoduliert auf eine mit fluoreszierenden Molekülen versehene Probe eingestrahlt wird und emittiertes Licht detektiert wird. Die Figur 3A zeigt schematisch das modulierte Signal als Funktion des Winkels zwischen der linearen Polarisation des Anregungslichts und dem Übergangsdipolmoment eines Moleküls, das in Figur 3B auch linear dargestellt ist. Die Figur 3C zeigt übereinander den Polarisationsvektor des Anregungslichts, der durch die Modulation zu Zeitpunkten t₁, t₂, t₃ eingestellt wird. Die Figur 3D zeigt übereinander jeweils den Dipolmomentvektor r₁ (parallel zur Polarisation des Anregungslichts bei 0° zur Zeit t₁), r₂ (parallel zur Polarisation des Anregungslichts bei ca. 45° zur Zeit t₂), r₃ (parallel zur Polarisation des Anregungslichts bei ca. 135° zur Zeit t₃) für eines von drei beispielhaften fluoreszierenden Molekülen. Die fluoreszierenden Moleküle sind dabei in Figur 3D an einer filamentartigen Probe angekoppelt. Dabei sind die Dipolmomentvektoren für jedes der beispielhaft gezeigten fluoreszierenden Moleküle in Figur 3D parallel zu denjenigen in Figur 3C.

In Figur 3E ist für jedes der drei fluoreszierenden Moleküle in einem Kästchen das räumliche Emissionssignal gezeigt, das bei der Polarisation des eingestrahlten Lichts bestimmter Orientierung beobachtet wird. Im ersten Kästchen ist die Polarisation parallel zu r₁ während in den Kästchen darunter die Polarisation des eingestrahlten Lichts parallel zu r₂ bzw. r₃ ausgerichtet ist. Es wird deutlich, dass die Modulation der Polarisation des eingestrahlten Lichts zu einer Emission nur durch diejenigen fluoreszierenden Moleküle führt, deren Dipolmomentvektor parallel zur Polarisation liegt. Der zeitliche Verlauf der Polarisation des für jeweils eines der fluoreszierenden Moleküle detektierten Lichts ist in Figur 3F gezeigt. Diese Darstellung der Polarisationsmodulation der Intensität einzelner fluoreszierender Moleküle macht deutlich, dass Licht ohne oder mit Phasenverschiebung zur Modulation der Polarisation des Anregungslichts emittiert wird und dass durch die Demodulation bzw. Entfaltung des emittierten Lichtsignals eine räumliche Lokalisierung der fluoreszierenden Moleküle erreicht wird.

In Figuren 4A bis F ist die optische Analyse für die Ausführungsform des Verfahrens gezeigt, bei der zusätzlich zum polarisationsmodulierten Anregungslicht Licht einer Lichtquelle 20, dessen Polarisation um 90° zur Polarisation des Anregungslichts versetzt ist, auf eine mit fluoreszierenden Molekülen versehene Probe eingestrahlt wird und emittiertes Licht detektiert wird. Dabei zeigen die Figuren 4A bis F die den Figuren 3A bis F entsprechenden Daten.

Entsprechend Figur 3A ist in Figur 4A das modulierte Signal als Funktion des Winkels zwischen der linearen Polarisation des Anregungslichts und dem Übergangsdipolmoment eines Moleküls gezeigt, das in Figur 4B auch linear dargestellt ist. Da das Licht der zweiten Lichtquelle eine Frequenz bzw. Wellenlänge aufweist, die die Emission der fluoreszierenden Moleküle unterdrückt bzw. abregt, wird dieses Licht auch als Abregungslicht bezeichnet. Generell führt die Einstrahlung des Abregungslichts mit einer um 90° versetzten Polarisation zur Beschränkung des Winkelbereiches der passend ausgerichteten fluoreszierenden Moleküle. Figur 4B zeigt, dass die Modulation durch das polarisationsversetzte Abregungslicht schärfer wird. Die Darstellungen in Figur 4D zeigen die Dipolmomentvektoren r₁, r₂, r₃, die der Polarisationsebene zum Zeitpunkt t₁, t₂, t₃ der Modulation von Figur 3C entsprechen. Weiter sind in Figur 4C zusätzlich die Polarisationsvektoren des Abregungslichts gezeigt, zur Zeit t₁ der Polarisationsvektor bei 90°, zur Zeit t₂ der Polarisationsvektor bei 135° und zur Zeit t₃ der Polarisationsvektor bei 225°. Der Beschränkung des Winkelbereiches der passend ausgerichteten fluoreszierenden Moleküle von Fig. 4A entsprechend sind die Winkelbereiche der fluoreszierenden Moleküle beschränkt bzw. schmaler. Figur 4E zeigt, dass die Einstrahlung des Abregungslichts mit einer zur Polarisation des Anregungslichts versetzten Polarisation bzw. die Beschränkung der Polarisation des Anregungslichts die Anregung bzw. Emission derjenigen fluoreszierenden Moleküle vermindert bzw. verhindert, deren Dipolmomentvektor nicht parallel zur Polarisation des Anregungslichts liegt, während die fluoreszierenden Moleküle zur Emission angeregt werden, deren Dipolmomentvektor parallel zur Polarisation des Anregungslichts liegt. Die Figur 4E zeigt auch, dass die demodulierte bzw. entfaltete detektierte Emission eine räumlich besser aufgelöste Darstellung ohne und mit Phasenverschiebung der Polarisation erlaubt, während Figur 4F zeigt, dass die detektierte Emission eine zeitlich besser aufgelöste Darstellung ohne und mit Phasenverschiebung der Polarisation erlaubt und daher eine räumlich besser aufgelöste Darstellung.

Die Figuren 3 und 4 zeigen auch, dass durch die Modulation der Polarisation des Anregungslichts und die Demodulation der detektierten Emission eine Unterdrückung unspezifischer Emission und die räumlich aufgelöste Detektion einzelner fluoreszierender Moleküle erlaubt.

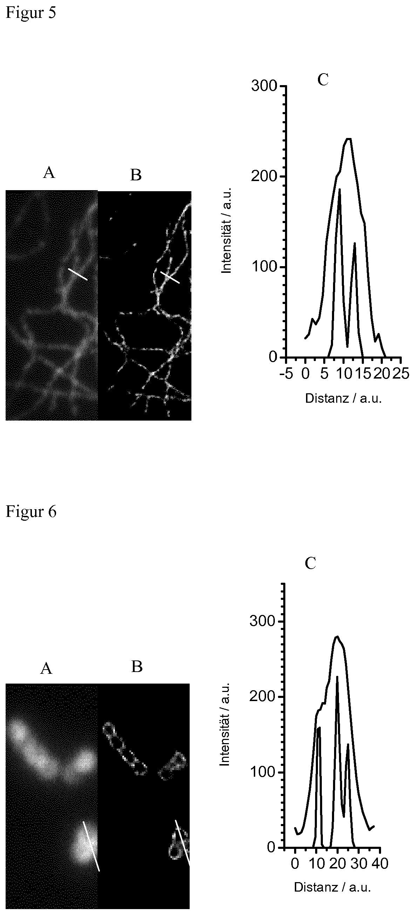

Figur 5A zeigt eine herkömmliche fluoreszenzmikroskopische Darstellung und Figur 5 B eine mittels der Erfindung erzeugte mikroskopische Darstellung, Figur 5C zeigt Intensitätsprofile entlang der in A und B markierten Linien. Die Signalaufnahme zu Figur 5 B erfolgte mit dem erfindungsgemäßen Verfahren unter Verwendung nur von Anregungslicht, wie dies schematisch in Figur 3 gezeigt ist. Für die Darstellungen von Figur 5B wurde ein 488 nm CW Laser mit linear polarisiertem Strahl als Anregungslichtquelle verwendet. Der Strahl trat zur Expansion durch ein Teleskopsystem und ein konstant rotierendes λ/2 Plättchen (achromatisch, 400-800 nm, Thorlab) als Polarisationsmodulator, um die Polarisationsebene des linear polarisierten Lichts durch Drehen zu modulieren. Die als Detektor eingesetzte Kamera war mit dem Steuersignal des Polarisationsmodulators synchronisiert. Anschließend wurde der Strahl in ein Mikroskopobjektiv (NA = 1,35, Ölimmersion, UPlanSApo, 60x, Olympus) geleitet, das auf einem Umkehrmikroskop (IX 71, Olympus) montiert war. Das emittierte Licht trat durch einen dichroitischen Spiegel (Strahlteiler z 488 RDC, AHF) und einen Emissionsfilter (ET Bandpass 525/50). Zur weiteren Vergrößerung und Fokussierung auf den Detektor (iXonEM+897, rückseitig beleuchtet, Andor Technology) wurde ein Linsensystem eingesetzt. Für die Darstellung von Figur 5A wurde dieselbe Optik verwendet, jedoch für eine herkömmliche fluoreszenzmikroskopische Aufnahme.

Gezeigt sind Ausschnitte von Zellen, in denen Mikrotubulifilamente mit dem Farbstoff Alexa488 markiert sind. Die Modulation erfolgte durch lineare Rotation der Polarisation des Anregungslichtes mit einer Periode von 167 ms und die Demodulation und Lokalisation erfolgte mit einer zeitlichen Cos²-Funktion und einer räumlichen Gauss-Funktion. Die Anregungswellenlänge lag bei 488 nm. Der Vergleich der erfindungsgemäß erzeugten Darstellung von Figur 5B mit der herkömmlich erzeugten Darstellung von Figur 5A macht die bessere Auflösung der mikroskopischen Darstellung deutlich, die mit dem erfindungsgemäßen Verfahren erhalten wird.

Die Intensitätsprofile von Figur 5C wurden jeweils entlang der weißen Linie in Figur 5 A bzw. 5 B aufgenommen und zeigen die Intensität aus Figur 5A als obere Kurve und die von Figur 5B als untere Kurve. Diese Darstellung macht deutlich, dass die Auflösung der mikroskopischen Darstellung, die mit dem erfindungsgemäßen Verfahren erhalten wurde, viel besser ist als die Auflösung der herkömmlich erzeugten Aufnahme.

Für die Darstellung von Figur 6B wurde eine entsprechende Vorrichtung verwendet, jedoch mit einem 568 nm CW Laser als Anregungslichtquelle. Der Anregungsstrahl wurde mittels eines dichroitischen Spiegels mit dem 715 nm Strahl eines Ti:Saphir-Lasers (CW) kombiniert. Der Strahl mit 568 nm war senkrecht zum Strahl mit 715 nm polarisiert, wobei als Polarisationsmodulator zwei rotierende λ/4-Plättchen (Achromatic λ/4 Plättchen, 400-700 nm, Newport) zur Modulation der Polarisation durch Drehung eingesetzt wurden. Das Mikroskopobjektiv war ein NA = 1,3, 100x Objektiv (Fluar, Zeiss).

Figur 6A zeigt eine herkömmliche fluoreszenzmikroskopische Darstellung und Figur 6 B eine mittels der Erfindung erzeugte mikroskopische Darstellung, Figur 6C zeigt die Intensitätsprofile entlang der in A und B markierten Linien. Die Signalaufnahme zu Figur 6 B erfolgte erfindungsgemäß, wie dies schematisch in Figur 4 gezeigt ist, mit in 90° versetzt polarisierter Abregungsstrahlung zur Beschränkung des Winkelbereiches der Anregung passend ausgerichteter fluoreszierender Moleküle. Gezeigt sind organische Kügelchen von ca. 500 nm Durchmesser, die zuerst auf einer Glasoberfläche fixiert wurden und deren Ränder (ohne Kontaktbereiche zwischen den Kügelchen) dann mit dem Farbstoff Atto 590 markiert wurden. Die Anregungswellenlänge lag bei 568 nm. Die Abregungsstrahlung zur Beschränkung des Winkelbereiches hatte eine Wellenlänge von 715 nm. Die Modulation erfolgte durch lineare Rotation der Polarisation des Anregungslichtes sowie des Abregungslichts mit einer Periode von 333 ms. Die Demodulation und Lokalisation erfolgte näherungsweise mit einer zeitlichen Cos²-Funktion und einer räumlichen Gauss-Funktion. Der Winkel der Polarisation des Anregungslichtes sowie des Abregungslichts betrug konstant 90°.

Die Intensitätsprofile von Figur 6C wurden jeweils entlang der weißen Linie in Figur 6 A bzw. 6 B aufgenommen und zeigen die Intensität aus Figur 6A als obere Kurve und die von Figur 6B als untere Kurve. Diese Darstellung macht deutlich, dass die Auflösung der mikroskopischen Darstellung, die mit dem erfindungsgemäßen Verfahren erhalten wurde, viel besser ist als die Auflösung der herkömmlich erzeugten Aufnahme.

## Patentansprüche

1. Vorrichtung zur optischen Analyse einer Probe (3), die zumindest ein fluoreszierendes Molekül enthält, mit zumindest einer Anregungslichtquelle (4) zur Erzeugung von Anregungslicht (5), mit einem Polarisationsmodulator (8), der eingerichtet ist, die Polarisation des Anregungslichts (5) mit einem Modulationssignal zu modulieren, mit einem optischen Element (1), das den Strahlengang des Anregungslichts (5) auf die Probe (3) richtet, einem ersten Detektor (10), der mit einer Signalauswerteeinrichtung gekoppelt ist, die eingerichtet ist, die detektierten Signale zu selektieren, die bei zumindest einer Frequenz detektiert werden, die gleich der Frequenz des Modulationssignals ist oder eingerichtet ist, die detektierten Signale zu selektieren, die gleich dem Modulationssignal selbst oder einem vom Modulationssignal abgeleiteten Signal ist, **dadurch gekennzeichnet, dass** der erste Detektor (10) im Strahlengang von dem von der Probe (3) emittierten Licht angeordnet ist,
der mittels eines ersten teildurchlässigen Spiegels (11) erzeugt ist, der in dem Strahlengang emittierter Strahlung angeordnet ist, die von dem optischen Element (1) ausgeht, und **gekennzeichnet durch** eine zweite Lichtquelle (20), die zur Erzeugung von polarisiertem Licht einer Abregungswellenlänge eingerichtet ist, dessen Polarisation um >0° bis <180° zur Polarisation des Anregungslichts (5) versetzt ist, wobei der Polarisationsmodulator (8, 21, 22) eingerichtet ist, die Polarisation des Abregungslichts mit dem Modulationssignal des Anregungslichts (5) zu modulieren und das Licht mit Abregungswellenlänge in das optische Element (1) gerichtet ist.

2. Vorrichtung nach Anspruch 1, **dadurch gekennzeichnet, dass** das Modulationssignal eine periodische Abfolge von Signalen mit einer festen Frequenz oder mit zumindest zwei überlagerten festen Frequenzen ist oder eine Abfolge von Signalen ist, die keine Wiederholung aufweisen.

3. Vorrichtung nach einem der voranstehenden Ansprüche, **dadurch gekennzeichnet, dass** das optische Element (1) ein Objektiv ist und/oder dass der erste Detektor (10) ein Flächendetektor ist.

4. Vorrichtung nach einem der voranstehenden Ansprüche, **dadurch gekennzeichnet, dass** der Polarisationsmodulator (8) ein in dem Strahlengang des Anregungslichts (5) mit dem Modulationssignal rotierendes polarisierendes Element ist, das einen Linearpolarisator, ein Phasenverschiebungselement oder eine Kombination von zumindest zwei im Winkel von 45° zueinander angeordneten Spiegeln aufweist, oder ein in dem Strahlengang des Anregungslichts (5) mit dem Modulationssignal angesteuertes akusto-optisches Element oder elektro-optisches Element ist.

5. Vorrichtung nach einem der voranstehenden Ansprüche, **dadurch gekennzeichnet, dass** sie einen zweiten Detektor (12) aufweist, der im Strahlengang des emittierten Lichts angeordnet ist und mit einer Signalauswerteeinrichtung gekoppelt ist, die eingerichtet ist, diejenigen detektierten Signale zu selektieren, die mit oder ohne Phasenverschiebung bei zumindest einer Frequenz detektiert werden, die gleich der Frequenz des Modulationssignals ist oder eingerichtet ist, die detektierten Signale zu selektieren, die mit oder ohne Phasenverschiebung detektiert werden, die gleich dem Modulationssignal selbst oder einem vom Modulationssignal abgeleiteten Signal sind.

6. Vorrichtung nach Anspruch 5, **dadurch gekennzeichnet, dass** zwischen dem ersten Detektor (10) und dem ersten Spiegel (11) ein zweiter teildurchlässiger Spiegel (13) angeordnet ist, in dessen reflektiertem Strahlengang ein zweiter Detektor (12) angeordnet ist.

7. Vorrichtung nach Anspruch 6, **dadurch gekennzeichnet, dass** der zweite teildurchlässige Spiegel (13) ein Polarisationsstrahlteiler ist und/oder der erste teildurchlässige Spiegel (11) ein dichroitischer Strahlteiler ist.

8. Vorrichtung nach einem der voranstehenden Ansprüche, **dadurch gekennzeichnet, dass** die Lichtquelle (4) eingerichtet ist, Anregungslicht (5) von 1 Lichtfrequenz zu erzeugen, deren Vielfaches die Anregungslichtfrequenz des fluoreszierenden Moleküls bilden oder eingerichtet ist, Anregungslicht (5) von zumindest zwei Lichtfrequenzen zu erzeugen, deren Summe die Anregungslichtfrequenz des fluoreszierenden Moleküls bildet.

9. Vorrichtung nach einem der Ansprüche 1 bis 8, **dadurch gekennzeichnet, dass** die Signalauswerteeinrichtung eingerichtet ist, ausschließlich diejenigen detektierten Signale zu selektieren, die mit oder ohne Phasenverschiebung zumindest einer Frequenz detektiert werden, die gleich der Frequenz des Modulationssignals ist oder eingerichtet ist, die detektierten Signale zu selektieren, die mit oder ohne Phasenverschiebung detektiert werden, die gleich dem Modulationssignal selbst oder einem vom Modulationssignal abgeleiteten Signal sind.

10. Vorrichtung nach einem der voranstehenden Ansprüche, **gekennzeichnet durch** mindestens eine zweite Lichtquelle (20) und einen in dem Strahlengang zwischen der Anregungslichtquelle (4) und dem optischen Element (1) angeordneten ersten teildurchlässigen Spiegel (11), der eingerichtet ist, Licht der ersten und zweiten Lichtquelle (4, 20) in den zum optischen Element (1) gerichteten Strahlengang zu reflektieren.

11. Vorrichtung nach Anspruch 10, **dadurch gekennzeichnet, dass** die erste und zweite Lichtquelle (4, 20) linear und um >0° bis <180°, insbesondere um 90° versetzt polarisiert sind.

12. Vorrichtung nach einem der voranstehenden Ansprüche, **gekennzeichnet durch** eine Einrichtung (6) zum Auslenken des Strahlengangs des Lichts zumindest einer von erster und zweiter Lichtquelle (4, 20) über die Probe (3).

13. Vorrichtung nach einem der voranstehenden Ansprüche, **dadurch gekennzeichnet, dass** im Strahlengang zwischen Anregungslichtquelle (4, 20) und dem optischen Element (1) ein erster teildurchlässiger Teilungsspiegel (23) angeordnet ist, der einen Teil des von zumindest einer von erster und zweiter Lichtquelle (4, 20) erzeugten Lichts umlenkt, zumindest ein Umlenkspiegel (27, 28) in dem vom ersten Teilungsspiegel (23) umgelenkten Teil des Anregungslichts (5) angeordnet ist, und ein zweiter teildurchlässiger Teilungsspiegel (24) eingerichtet ist, den umgelenkten Teil des Anregungslichts (5), der von dem zumindest einen Umlenkspiegel (27, 28) reflektiert wird, in den Strahlengang des Anregungslichts (5) zu richten, der auf das optische Element (1) gerichtet ist, wobei in dem Strahlengang zwischen dem ersten und zweiten teildurchlässigen Teilungsspiegel (23, 24) ein weiterer Polarisationsmodulator, ein Phasenverschiebungselement und/oder ein Polarisationsdrehelement (26) angeordnet ist.

14. Vorrichtung nach einem der voranstehenden Ansprüche, **dadurch gekennzeichnet, dass** ein Multifokalelement im Strahlengang des Anregungslichts (5) angeordnet ist.

15. Vorrichtung nach einem der Ansprüche 10 bis 14, **dadurch gekennzeichnet, dass** die zweite Lichtquelle (20) eingerichtet ist, Licht einer Abregungswellenlänge und/oder Licht einer Umschaltwellenlänge zu erzeugen, die jeweils für zumindest ein fluoreszierendes Molekül spezifisch ist.

16. Vorrichtung nach einem der voranstehenden Ansprüche, **gekennzeichnet durch** eine Auswerteeinheit, die eingerichtet ist, die von dem Modulationssignal abhängigen Emissionsmaxima der detektierten Emissionssignale ortsspezifisch in einer gemeinsamen Darstellung darzustellen.

17. Vorrichtung nach Anspruch 1, **dadurch gekennzeichnet, dass** sie eingerichtet ist, das von der zweiten Lichtquelle (20) erzeugte Abregungslicht (5) in Ringform mit zentraler Nullstelle auf die Probe (3) einzustrahlen.

18. Verfahren zur optischen Analyse einer Probe (3), mittels einer Vorrichtung nach einem der voranstehenden Ansprüche, wobei die Probe (3) zumindest ein fluoreszierendes Molekül enthält, durch Einstrahlen von Anregungslicht (5) einer ersten Anregungslichtquelle (4) auf die Probe (3), mit Modulieren der Polarisation des Anregungslichts (5) mit einem Modulationssignal und Detektieren des von der Probe (3) emittierten Lichts, wobei der Strahlengang, in dem die emittierte Strahlung geführt wird, durch dasselbe optische Element gerichtet ist, durch das der Strahlengang des Anregungslichts geführt ist, wobei die Detektion die Selektion von Signalen umfasst, die bei zumindest einer Frequenz detektiert werden, die gleich der Frequenz des Modulationssignals ist oder die gleich dem Modulationssignal selbst sind oder die bei einem vom Modulationssignal abgeleiteten Signal detektiert werden, **dadurch gekennzeichnet, dass** Licht einer Abregungswellenlänge einer zweiten Lichtquelle (20), dessen Polarisation um >0° bis <180° zur Polarisation des Anregungslichts (5) versetzt ist, mit Modulieren seiner Polarisation durch das Modulationssignal auf die Probe eingestrahlt wird und dass eine Auswerteeinheit die von dem Modulationssignal abhängigen Emissionsmaxima der detektierten Emissionssignale ortsspezifisch in einer gemeinsamen Darstellung darstellt.

19. Verfahren nach Anspruch 19, **dadurch gekennzeichnet, dass** die erste und zweite Lichtquelle (4, 20) linear polarisiert sind.

20. Verfahren nach Anspruch 19 oder 20, **dadurch gekennzeichnet, dass** das optische Element (1) ein Objektiv ist und/oder dass der Detektor zur Detektion ein Flächendetektor ist.

## Claims

1. Device for the optical analysis of a sample (3) that comprises at least one fluorescent molecule, the device having at least one excitation light source (4) for the generation of excitation light (5), having a polarization modulator (8) that is configured to modulate the polarization of the excitation light (5) with a modulation signal, having an optical element (1) that directs the optical path of the excitation light (5) onto the sample (3), having a first detector (10) coupled to a signal analysis equipment which is configured to select the detected signals that are detected at at least one frequency that is equal to the frequency of the modulation signal, or the signal analysis equipment is configured to select the detected signals that are equal to the modulation signal itself or which signals are equal to a signal derived from the modulation signal, **characterized in that** the first detector (10) is arranged in the optical path of the light emitted from the sample (3), the optical path being generated by means of a first partially transparent mirror (11) that is arranged in the optical path of emitted radiation emanating from the optical element (1), and **characterized by** a second light source (20) configured for the generation of polarised light of a de-excitation wavelength, the polarization of which is shifted by >0° up to <180° to the polarization of the excitation light (5), wherein the polarization modulator (8, 21, 22) is configured to modulate the polarization of the de-excitation light with the modulation signal of the excitation light (5), and wherein the light of the de-excitation wavelength is directed into the optical element (1).

2. Device according to claim 1, **characterized in that** the modulation signal is a periodic sequence of signals of stable frequency or of at least two superimposed stable frequencies, or a sequence of signals that have no repetitions.

3. Device according to one of the preceding claims, **characterized in that** the optical element (1) is an objective and/or the first detector (10) is an area detector.

4. Device according to one of the preceding claims, **characterized in that** the polarization modulator (8) is a polarizing element rotating with the modulation signal in the optical path of the excitation light (5), the polarizing element having a linear polarizer, a phase-shifting element, or a combination of at least two mirrors that are arranged at an angle of 45° to one another, or the polarization modulator (8) is an acousto-optical element or an electro-optical element in the optical path of the excitation light (5), the acousto-optical element or electro-optical element being controlled by the modulation signal.

5. Device according to one of the preceding claims, **characterized in** having a second detector (12) arranged in the optical path of the emitted light and coupled to a signal analysis equipment that is configured to select those detected signals that are detected with or without phase shift at at least one frequency equal to the frequency of the modulation signal, or configured to select the detected signals that are detected with or without phase shift and that are equal to the modulation signal itself or that are equal to a signal derived from the modulation signal.

6. Device according to claim 5, **characterized in that** a second partially transparent mirror (13) is arranged between the first detector (10) and the first mirror (11), and a second detector (12) is arranged in the reflected optical path of the second partially transparent mirror (13).

7. Device according to claim 6, **characterized in that** the second partially transparent mirror (13) is a polarization beam splitter and/or the first partially transparent mirror (11) is a dichroitic beam splitter.

8. Device according to one of the preceding claims, **characterized in that** the light source (4) is configured to generate excitation light (5) of 1 light frequency, a multiple of which forms the excitation light frequency of the fluorescent molecule, or is configured to generate excitation light (5) of at least two light frequencies, the sum of which forms the excitation light frequency of the fluorescent molecule.

9. Device according to one of claims 1 to 8, **characterized in that** the signal analysis equipment is configured to exclusively select those detected signals that are detected with or without phase shift at at least one frequency equal to the frequency of the modulation signal, or is configured to select those detected signals that are detected with or without phase shift that are equal to the modulation signal itself, or that are equal to a signal derived from the modulation signal.

10. Device according to one of the preceding claims, **characterized by** at least a second light source (20) and by a first partially transparent mirror (11) arranged in the optical path between the excitation light source (4) and the optical element (1), the partially transparent mirror (11) being configured to reflect light from the first and second light sources (4, 20) into the optical path that is directed to the optical element (1).

11. Device according to claim 10, **characterized in that** the first and second light sources (4, 20) are linearly polarized and the polarization is shifted by >0° up to <180°, especially by 90°.

12. Device according to one of the preceding claims, **characterized by** a device (6) for deflecting the optical path of the light of at least one of first and second light sources (4, 20) over the sample (3).

13. Device according to one of the preceding claims, **characterized in that** a first partially transparent separation mirror (23) is arranged in the optical path between the excitation light source (4, 20) and the optical element (1), the separation mirror (23) deflecting a part of the light generated by at least one of the first and second light sources (4, 20), **in that** at least one deflection mirror (27, 28) is arranged in the part of the excitation light (5) deflected by the first separation mirror (23), and **in that** a second partially transparent separation mirror (24) is configured to direct the deflected part of the excitation light (5) reflected by the at least one deflection mirror (27, 28) into the optical path of the excitation light (5), which optical path is directed onto the optical element (1), wherein an additional polarization modulator, a phase-shifting element and/or a polarization-rotating element (26) is arranged in the optical path between the first and second partially transparent separation mirrors (23, 24).

14. Device according to one of the preceding claims, **characterized in that** a multifocal element is arranged in the optical path of the excitation light (5).

15. Device according to one of claims 10 to 14, **characterized in that** the second light source (20) is configured to generate light of a de-excitation wavelength and/or to generate light of a conversion wavelength, each wavelength being specific for at least one fluorescent molecule.

16. Device according to one of the preceding claims, **characterized by** an analysing unit that is configured to display the emission maxima of the detected emission signals site-specifically in a common presentation, which emission maxima depend on the modulation signal.

17. Device according to claim 1, **characterized in that** it is configured to irradiate the de-excitation light (5) onto the sample (3) in a ring-shaped fashion with a central zero, the light being generated by the second light source (20).

18. Process for the optical analysis of a sample (3), especially by means of a device according to one of the preceding claims, wherein the sample (3) comprises at least one fluorescent molecule, by irradiating excitation light (5) of a first excitation light source (4) onto the sample (3), with modulating the polarization of the excitation light (5) with a modulation signal and detecting the light emitted by the sample (3), wherein the optical path in which the emitted light is guided is directed through the same optical element through which the optical path of the excitation light is guided, wherein the detection comprises the selection of signals that are detected at at least one frequency equal to the frequency of the modulation signal, or of signals that are equal to the modulation signal itself, or of signals that are detected at a signal derived from the modulation signal, **characterized in that** light of a de-excitation wavelength of a second light source (20) is irradiated onto the sample (3) with modulation of its polarization by the modulation signal, the light having its polarization shifted by >0° up to <180° to the polarization of the excitation light (5), and **in that** an analysis unit displays the emission maxima of the detected emission signals site-specifically in a common presentation, which emission maxima depend on the modulation signal.

19. Process according to claim 18, **characterized in that** the first and second light sources (4, 20) are linearly polarized.

20. Process according to claim 18 or 19, **characterized in that** the optical element (1) is an objective and/or **in that** the detector for detection is an area detector.

## Revendications

1. Dispositif d'analyse optique d'un échantillon (3) qui comprend au moins une molécule fluorescente, comportant au moins une source de lumière d'excitation (4) pour la génération de lumière d'excitation (5), un modulateur de polarisation (8) adapté à moduler la polarisation de la lumière d'excitation (5) par un signal de modulation, un élément optique (1) qui dirige le chemin optique de la lumière d'excitation (5) sur l'échantillon (3), un premier détecteur (10) qui est relié à un appareil d'évaluation de signaux, qui est adapté à sélectionner les signaux détectés qui sont détectés à au moins une fréquence qui est égale à la fréquence du signal de modulation, ou qui est adapté à sélectionner les signaux détectés qui sont égaux au signal de modulation lui-même ou à un signal dérivé du signal de modulation, **caractérisé en ce que** le premier détecteur (10) est disposé dans le chemin optique de la lumière émise par l'échantillon (3), le chemin optique étant généré au moyen d'un premier miroir (11) partiellement transparent, qui est disposé dans le chemin optique de la radiation émise, qui émane de l'élément optique (1), et **caractérisé par** une seconde source de lumière (20), qui est adaptée pour la génération de lumière polarisée d'une longueur d'onde de désexcitation dont la polarisation est en déphasage de >0° à <180° par rapport à la polarisation de la lumière d'excitation (5), le modulateur de polarisation (8, 21, 22) étant adapté à moduler la polarisation de la lumière de désexcitation par le signal de modulation de la lumière d'excitation (5) et la lumière de longueur d'onde de désexcitation étant dirigée dans l'élément optique (1).

2. Dispositif selon la revendication 1, **caractérisé en ce que** le signal de modulation est une séquence périodique de signaux d'une fréquence fixe ou d'au moins deux fréquences fixes superposées ou une séquence de signaux qui ne présente pas de répétitions.

3. Dispositif selon l'une des revendications précédentes, **caractérisé en ce que** l'élément optique (1) est un objectif et/ou **en ce que** le premier détecteur (10) est un détecteur de surface.

4. Dispositif selon l'une des revendications précédentes, **caractérisé en ce que** le modulateur de polarisation (8) est un élément polarisant qui tourne avec le signal de modulation dans le chemin optique de la lumière d'excitation (5), ledit élément polarisant présentant un polariseur linéaire, un élément de déphasage ou une combinaison d'au moins deux miroirs disposés à un angle de 45° l'un par rapport à l'autre, ou un élément acousto-optique ou un élément électro-optique commandé par le signal de modulation dans le chemin optique de la lumière d'excitation (5).

5. Dispositif selon l'une des revendications précédentes, **caractérisé en ce qu'**il présente un deuxième détecteur (12), qui est disposé dans le chemin optique de la lumière émise et relié à un appareil d'évaluation de signaux, qui est adapté à sélectionner les signaux détectés qui sont détectés avec ou sans déphasage à au moins une fréquence qui est égale à la fréquence du signal de modulation, ou qui est adapté à sélectionner les signaux détectés qui sont détectés avec ou sans déphasage et qui sont égaux au signal de modulation lui-même ou à un signal dérivé du signal de modulation.

6. Dispositif selon la revendication 5, **caractérisé en ce que**, entre le premier détecteur (10) et le premier miroir (11), un deuxième miroir partiellement transparent est disposé, dans le chemin optique reflété duquel un deuxième détecteur (12) est disposé.

7. Dispositif selon la revendication 6, **caractérisé en ce que** le deuxième miroir (13) partiellement transparent est un séparateur de faisceaux polarisant et/ou le premier miroir (11) partiellement transparent est un séparateur de faisceaux dichroïque.

8. Dispositif selon l'une des revendications précédentes, **caractérisé en ce que** la source de lumière (4) est adaptée à générer de la lumière d'excitation (5) d'une fréquence de lumière dont le multiple constitue la fréquence de lumière d'excitation de la molécule fluorescente ou est adaptée à générer de la lumière d'excitation (5) d'au moins deux fréquences de lumière dont la somme constitue la fréquence de lumière d'excitation de la molécule fluorescente.

9. Dispositif selon l'une des revendications 1 à 8, **caractérisé en ce que** l'appareil d'évaluation de signaux est adapté à sélectionner exclusivement les signaux détectés qui sont détectés avec ou sans déphasage au moins d'une fréquence qui est égale à la fréquence du signal de modulation ou est adapté à sélectionner les signaux détectés qui sont détectés avec ou sans déphasage et qui sont égaux au signal de modulation soi-même ou à un signal dérivé du signal de modulation.

10. Dispositif selon l'une des revendications précédentes, **caractérisé par** au moins une deuxième source de lumière (20) et un premier miroir (11) partiellement transparent disposé dans le chemin optique entre la source de lumière d'excitation (4) et l'élément optique (1), le premier miroir (11) étant adapté à refléter de la lumière des première et deuxième sources de lumière (4, 20) dans le chemin optique dirigé vers l'élément optique (1).

11. Dispositif selon la revendication 10, **caractérisé en ce que** les première et deuxième sources de lumière (4, 20) sont de polarisation linéaire et en déphasage de >0° à <180°, en particulier de 90°.

12. Dispositif selon l'une des revendications précédentes, **caractérisé par** un appareil (6) pour dévier le chemin optique de la lumière d'au moins une des première et deuxième sources de lumière (4, 20) sur l'échantillon (3).

13. Dispositif selon l'une des revendications précédentes, **caractérisé en ce que** un premier miroir séparateur (23) partiellement transparent est disposé dans le chemin optique entre une source de lumière d'excitation (4, 20) et l'élément optique, le premier miroir séparateur (23) renvoyant une partie de la lumière générée par au moins une des première et deuxième sources de lumière (4, 20), au moins un miroir de renvoi (27, 28) est disposé dans la partie de la lumière d'excitation (5) renvoyée par le premier miroir séparateur (23), et un deuxième miroir séparateur (24) partiellement transparent est adapté à diriger la partie renvoyée de la lumière d'excitation (5), qui est reflétée par l'au moins un miroir de renvoi (27, 28), dans le chemin optique de la lumière d'excitation (5) dirigé sur l'élément optique (1), un modulateur de polarisation, un élément de déphasage et/ou un élément rotateur de polarisation (26) supplémentaire étant disposé dans le chemin optique entre le premier et le deuxième miroirs séparateurs (23, 24) partiellement transparents.

14. Dispositif selon l'une des revendications précédentes, **caractérisé en ce qu'**un élément multifocal est disposé dans le chemin optique de la lumière d'excitation (5).

15. Dispositif selon l'une des revendications 10 à 14, **caractérisé en ce que** la deuxième source de lumière (20) est adaptée à générer de la lumière d'une longueur d'onde de désexcitation et/ou de la lumière d'une longueur d'onde de commutation respectivement spécifique à au moins une molécule fluorescente.

16. Dispositif selon l'une des revendications précédentes, **caractérisé par** un bloc d'évaluation qui est adapté à représenter dans une représentation commune de manière localement spécifique les maxima d'émission, qui dépendent du signal de modulation, des signaux d'émission détectés.

17. Dispositif selon la revendication 1, **caractérisé en ce qu'**il est adapté à irradier la lumière de désexcitation (5) générée par la deuxième source de lumière (20) en forme circulaire avec son point central dirigé vers l'échantillon (3).

18. Procédé d'analyse optique d'un échantillon (3), au moyen d'un dispositif selon l'une des revendications précédentes, l'échantillon (3) comportant au moins une molécule fluorescente, par l'irradiation de lumière d'excitation (5) d'une première source de lumière d'excitation (4) sur l'échantillon (3), avec une modulation de la polarisation de la lumière d'excitation (5) par un signal de modulation et une détection de la lumière émise par l'échantillon (3), le chemin optique, dans lequel la radiation émise est guidée, étant dirigé à travers le même élément optique à travers lequel le chemin optique de la lumière d'excitation est guidé, la détection comprenant la sélection de signaux qui sont détectés à au moins une fréquence qui est égale à la fréquence du signal de modulation ou qui sont égaux au signal de modulation soi-même ou qui sont détectés d'un signal dérivé du signal de modulation, **caractérisé en ce que** la lumière d'une longueur d'onde de désexcitation d'une deuxième source de lumière (20), dont la polarisation est en déphasage de >0° à <180° par rapport à la polarisation de la lumière d'excitation (5), avec une modulation de sa polarisation par le signal de modulation, est irradiée sur l'échantillon et **en ce que** l'appareil d'évaluation représente dans une représentation commune d'une manière localement spécifique les maxima d'émission, qui dépendent du signal de modulation, des signaux d'émission détectés.

19. Procédé selon la revendication 19, **caractérisé en ce que** les première et deuxième sources de lumière (4, 20) sont polarisées de manière linéaire.

20. Procédé selon la revendication 19 ou 20, **caractérisé en ce que** l'élément optique (1) est un objectif et/ou **en ce que** le détecteur est un détecteur de surface.
